(19) Europäisches Patentamt

**European Patent Office**

**Office européen des brevets**

(11) Veröffentlichungsnummer: **0 274 643 B1**

(12) **EUROPÄISCHE PATENTSCHRIFT**

(45) Veröffentlichungstag der Patentschrift: **05.02.92**

(21) Anmeldenummer: **87117753.1**

(22) Anmeldetag: **01.12.87**

(51) Int. Cl.⁵: **F24F 3/00**, F25B 25/00, F25B 23/00

(54) **Klimaprüfkammer.**

(30) Priorität: **15.01.87 DE 3700976**

(43) Veröffentlichungstag der Anmeldung:
**20.07.88 Patentblatt 88/29**

(45) Bekanntmachung des Hinweises auf die
Patenterteilung:
**05.02.92 Patentblatt 92/06**

(84) Benannte Vertragsstaaten:
**DE FR GB IT NL SE**

(56) Entgegenhaltungen:
**DE-A- 2 843 846**
**DE-B- 1 698 104**
**US-A- 4 541 248**

(73) Patentinhaber: **Heraeus-Vötsch GmbH**
**Heraeusstrasse 12-14**
**W-6450 Hanau(DE)**

(72) Erfinder: **Mayer, Xaver**
**Baumgartenweg 12**
**W-7451 Grosselfingen(DE)**
Erfinder: **Ruoss, Hermann**
**Im Zwerchwiesle 2**
**W-7460 Balingen(DE)**
Erfinder: **Hezel, Werner**
**Wielandstrasse 12**
**W-7460 Balingen(DE)**

(74) Vertreter: **Heinen, Gerhard, Dr.**
**Heraeus Holding GmbH Heraeusstrasse**
**12-14**
**W-6450 Hanau am Main(DE)**

# Beschreibung

Die vorliegende Erfindung betrifft eine Klimaprüfkammer mit einem Nutzraum und einem angrenzenden Luftbehandlungsraum, in dem ein Wärmetauscher angeordnet ist, wobei der Wärmetauscher über einen unteren und einen oberen Anschluß von einem Temperiermedium durchströmt wird, über das in mindestens einem Temperiersystem mit einem einen Verdampfer aufweisenden Kreislauf Wärme übertragen wird.

Eine solche Klimaprüfkammer ist in der DE-B 16 98 104 angegeben. Weitere Klimaprüfkammern werden beispielsweise in der DE-C 19 49 001 und der DE-A 27 21 862 sowie der DE-A 34 05 584 beschrieben.

Bei solchen Prüfkammern ist es erforderlich, schnelle Temperaturwechsel zu erzielen, die beispielsweise in einem Temperaturbereich von +180 °C bis zu -80 °C liegen können. Für eine solche Temperierung sind verschiedene Systeme bekannt. Beispielsweise werden indirekte Temperiersysteme eingesetzt, bei denen Heizung und Kühlung durch einen zwischengeschalteten separaten Wärmeträger (z. B. Sole, Öl, Luft) kontinuierlich auf die Prüfraumluft einwirken. Für den Wärmeaustausch zwischen der Prüfraumluft und dem zwischengeschalteten Wärmeträger werden Wärmetauscher verwendet, die beispielsweise im Luftbehandlungsraum bzw. an den Prüfraumwänden angeordnet sind. Zur schnellen Abkühlung bzw. schnellen Aufheizung der Prüfraumluft ist eine große wirksame Wärmeaustauscherfläche erforderlich. Derartige Temperiersysteme haben sich bisher im Einsatz gut bewährt; es müssen aber die zur Zirkulation des Temperiermediums erforderlichen Pumpen und Ventile gewartet werden.

Aus der DE-A 28 43 846 ist ein Temperiersystem beschrieben, das nach dem Prinzip des Thermosyphons ohne einen Kompressor für das Kühlmittel arbeitet. Dieses Temperiersystem weist einen Kondensatabscheider auf, bei dem die flüssige Phase des Temperiermediums in einem als Speichervorrichtung dienenden Behälter gesammelt wird.

Der vorliegenden Erfindung liegt die Aufgabe zugrunde, eine Klimaprüfkammer anzugeben, bei der ein schneller Temperaturwechsel im Rahmen eines großen Temperierbereiches, sowohl im Hinblick auf eine Kühlung als auch auf eine Aufheizung der Nutzraumluft, erzielt werden kann, wobei die für diese Temperierung erforderlichen beweglichen Teile, wie Pumpen, entfallen und Ventile auf ein Minimum reduziert sind.

Diese Aufgabe wird dadurch gelöst, daß zwei Temperiersysteme vorhanden sind mit jeweils einem Kodensatabscheider, die jeweils in einem unteren Teil die flüssige Phase des Temperiermediums, das eine siedende Flüssigkeit ist, und in einem oberen Teil die gasförmige Phase des Temperiermediums enthalten, wobei der eine Kondensatabscheider des Temperiersystems zur Kühlung niveaumäßig oberhalb des Wärmetauschers angeordnet ist in seinem oberen, die gasförmige Phase des Temperiermediums aufweisenden Bereich einen Verdampfer enthält und wobei der obere Anschluß des Wärmetauschers mit dem oberen, die gasförmige Phase aufweisenden Teil und der untere Anschluß mit dem unteren, die flüssige Phase aufweisenden Teil des einen Kondensatabscheiders strömungsmäßig verbunden ist, daß der andere Kondensatabscheider des Temperiersystems zur Heizung niveaumäßig unterhalb des Wärmetauschers angeordnet ist und in seinem unteren, die flüssige Phase des Temperiermediums aufweisenden Bereich einen Heizkörper enthält, und daß vor dem einen Anschluß und dem anderen Anschluß des Wärmetauschers jeweils ein umsteuerbares, die Kondensatabscheider verbindendes Ventil angeordnet ist.

Ein derartiger Klimaschrank zeichnet sich durch seinen einfachen Aufbau aus. Mit dem Temperiersystem sind große Wärmemengen bei kleinstem Temperaturgradienten übertragbar. Für den Wärmetransport sind keine Bauelemente mit Verschleißteilen, wie beispielsweise Pumpen, erforderlich, wodurch sich das System wartungsfreundlich gestaltet.

Zur Kühlung der Nutzraumluft wird der Kondensatabscheider niveaumäßig oberhalb des Wärmetauschers, der sich im Luftbehandlungsraum der Klimaprüfkammer befindet, angeordnet und sein oberer, die gasförmige Phase des Temperiermediums aufweisender Bereich mit dem oberen ausgangsseitigen Ende des Wärmetauschers verbunden. Der untere Teil des Kondensatabscheiders ist an den Eingang des Wärmetauschers angeschlossen. Im oberen Bereich des Kondensatabscheiders ist eine Kühleinrichtung vorgesehen, bevorzugt ein im oberen Bereich des Kondensatabscheiders angeordneter Verdampfer, der über einen Kühlkreislauf gekühlt wird, und an dem die im Wärmetauscher verdampfte siedende Flüssigkeit kondensiert wird. Das Kondensat, d.h. die flüssige Phase der siedenden Flüssigkeit, wird dann dem Eingang des Wärmetauschers durch die Zuführleitung wieder zugeführt.

Die Aufheizung des Klimaschrankes kann auf herkömmliche Art durch den Einbau von elektrischen Widerstandsheizkörpern im Luftbehandlungsraum vorgenommen werden. Gemäß der Erfindung wird die Aufheizung der Nutzraumluft durch einen Kreislauf vorgenommen, bei dem der Kondensatabscheider niveaumäßig unterhalb des Wärmetauschers, der sich im Luftbehandlungsraum der Klimaprüfkammer befindet, angeordnet ist und in seinem die flüssige Phase des Temperiermediums aufweisenden Bereich einen Heizkörper enthält. Hierbei ist wiederum der obere, die gasförmige Phase des Temperiermediums enthaltende Bereich des Kondensatabscheiders mit dem oben liegenden Ausgang des Wärmetauschers verbunden. In diesem Fall wird mittels des Heizkörpers, bei dem sich bevorzugt um einen Widerstandsheizkörper handelt, im Kondensatabscheider die flüssige Phase der siedenden Flüssigkeit in die Dampfphase überführt, die dann dem oben liegenden Ausgang des Wärmetauschers, der für diesen Fall in Strömungsrichtung gesehen den Eingang bildet, zugeführt wird, wo die flüssige Phase kondensiert wird; das Kondensat wird dann wieder zum Kondensatabscheider, der sich unterhalb des Wärmetauschers befindet, durch die Schwerkraft zurückgeführt. Die Regelung dieses Kreislaufes kann einerseits durch die Heizleistung der Heizung in dem Kondensatabscheider und andererseits durch ein zusätzliches Ventil, bevorzugt ein Magnetventil, das in die die gasförmige Phase führende Rohrleitung zu dem Wärmetauscher hin eingesetzt wird, erfolgen.

Zum Abschalten des Kreislaufes ist bevorzugt in der Leitung zwischen dem Kondensatabscheider und dem Eingang des Wärmetauschers ein Absperrorgan eingesetzt. Die Regelung des Kreislaufes erfolgt über das Regelventil.

Gut bewährt hat sich ein Wärmetauscher im Luftbehandlungsraum, bei dem mehrere horizontal verlaufende Rohre auf der einen Seite in ein gemeinsames Zuführrohr münden, das den unteren Anschluß bildet, und auf der anderen Seite in ein Steigrohr übergehen, das den oberen Anschluß bildet und durch das die gasförmige Phase der siedende Flüssigkeit zu dem Kondensatabscheider strömt. Mit einem solchen Wärmetauscher wird gewährleistet, daß die flüssige Phase des Wärmeträgermediums in kürzester Zeit in die dampfförmige Phase übergeht.

Als Verdampfer in dem Kondensatabscheider haben sich Rohrschlangen, insbesondere Rippenrohre oder Rohr-/Lamellenwärmetaucher, als vorteilhaft erwiesen.

Als Kältemittel für einen Temperaturbereich zwischen -20°C bis +100°C wird bevorzugt ein Kältemittel auf der Basis von Fluor-Kohlenstoff eingesetzt.

Ausführungsbeispiele der Erfindung sind in der Zeichnung dargestellt und werden im folgenden näher beschrieben.

Es zeigen

Figur 1   eine schematische Darstellung des Temperiersystems zur Kühlung der Nutzraumluft,

Figur 2   eine schematische Darstellung des Temperiersystems zur Aufheizung der Nutzraumluft und

Figur 3   ein Temperiersystem, das sowohl zur Kühlung als auch zur Aufheizung der Nutzraumluft geeignet ist.

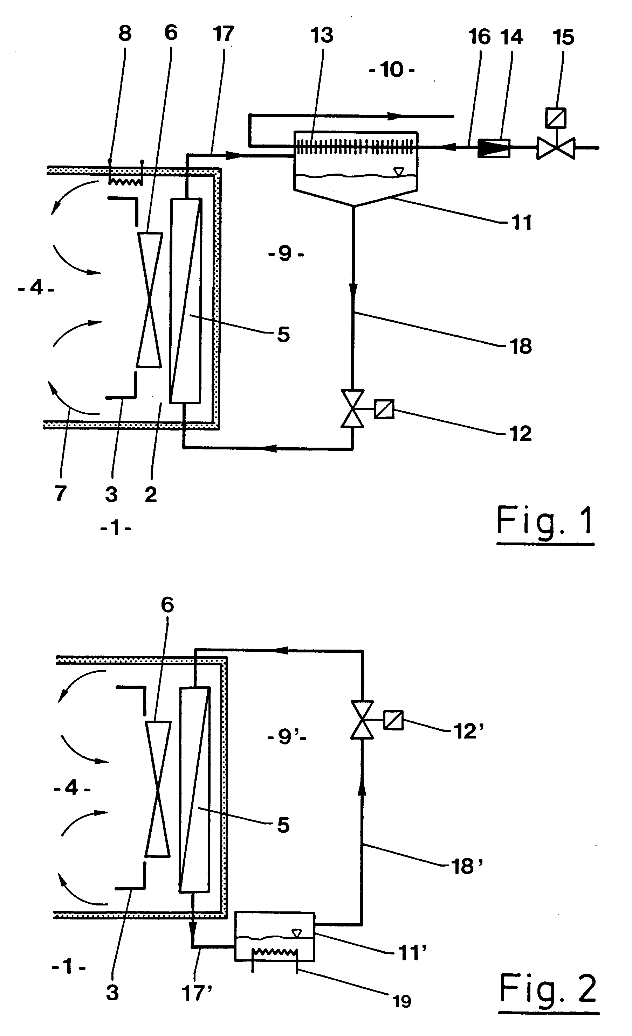

Ausschnittsweise ist eine Klimaprüfkammer 1 im Bereich ihres Luftbehandlungsraums 2, der durch Trennwände 3 vom Nutzraum 4 abgetrennt ist, gezeigt. In dem Luftbehandlungsraum 2 befindet sich ein Wärmetauscher 5 mit einem Lüfter 6, über den die Luft aus dem Nutzraum 4 in Richtung der Pfeile 7 an dem Wärmetauscher 5 vorbeigeführt wird. Bei dieser Klimaprüfkammer erfolgt die Aufheizung und Abkühlung des Nutzraums über zwei getrennte Systeme. Zum Aufheizen ist im oberen Bereich des Luftbehandlungsraums 2 ein Heizkörper 8 angeordnet, bei dessen Betrieb die aus dem Luftbehandlungsraum 2 ausströmende Luft aufgeheizt wird. Für die Kühlung der Nutzraumluft ist ein indirektes Temperiersystem vorgesehen, das ein erstes und ein zweites Temperiersystem 9, 10 aufweist. Das erste Temperiersystem 9 umfaßt neben dem Wärmetauscher 5 einen Kondensatabscheider 11 sowie ein Absperrorgan 12. Das zweite Temperiersystem 10 weist einen Verdampfer 13, der Teil des Kondensatabscheiders 11 ist, sowie ein Expansionsventil 14 und ein Regelventil 15 auf. Während in dem ersten Temperiersystem 9 eine siedende Flüssigkeit eingefüllt ist, wird das zweite Temperiersystem 10 von einem geeigneten Kältemittel durchflossen. Dieses Kältemittel wird über die Verdampferzuleitung 16 dem Verdampfer 13 zugeführt, so daß der Verdampfer 13, bei dem es sich in dem in Figur 1 gezeigten Ausführungsbeispiel um ein Rippenrohr handelt, auf eine niedrige Temperatur, beispielsweise -20°C, abkühlt. An diesem Verdampfer bzw. Rippenrohr 13 kondensiert die aus dem Wärmetauscher 5 über die Zuleitung 17 zurückgeführte gasförmige Phase der siedenden Flüssigkeit und tropft in den unteren Bereich des Kondensatabscheiders 11, dessen tiefster Bereich mit einer Zuführleitung 18 verbunden ist, welche die flüssige Phase der siedenden Flüssigkeit über das Absperrorgan 12 dem Wärmetauscher 5 eingangsseitig zuführt. In dem Wärmetauscher 5 verdampft nun die Flüssigkeit wieder durch die Wärmemenge, die der aus dem Nutzraum 4 über den Ventilator 6 angesaugten Luft entnommen wird. Die dampfförmige Komponente der siedenden Flüssigkeit strömt über eine Steigleitung in dem Wärmetauscher 5 und über die Zuleitung 17 in den Kondensatabscheider 11, wo die Kondensation erfolgt. Mit diesen Temperiersystem stellt sich ein geringer Temperaturgradient zwischen der Temperatur der Luft des Luftbehandlungsraums, der Temperatur in der Zuführleitung 18 zu dem Wärmetauscher 5 sowie der Temperatur in der Zuleitung 17 zu dem Kondensatabscheider 11 ein. Hinsichtlich eines solchen geringen Temperaturgradienten sollte der Wärmetauscher 5 eine möglichst große wirksame Oberfläche aufweisen, wozu er in dem gezeigten Beispiel die gesamte Höhe des Luftbehandlungsraums 2 ausfüllt. Da zur Wärmeübertragung die gesamte Verdampfungswärme der siedenden Flüssigkeit zur Verfügung steht, können sehr große Wärmemengen bei geringem Temperaturgradienten transportiert werden. Durch Verwendung eines geeigneten Wärmeträgers kann ein großer Temperaturbereich abgedeckt werden. Beispielsweise wurde der Kreislauf des beschriebenen Beispiels für einen Überdruck von etwa 20 bar ausgelegt und als Wärmeträger (siedende Flüssigkeit) R11 (DIN 8962 - Bezeichnung für Trichlorfluormethan) verwendet, womit ein Temperaturbereich von -20 °C bis + 150 °C entsprechend einem Druckbereich von etwa 0,15 bis 20 bar erzielt werden konnte. Während das Absperrorgan 12 in der Zuführleitung zu dem Wärmetauscher 5 lediglich dazu dient, das Temperiersystem 9 vom Wärmetauscher abzukoppeln, erfolgt die eigentliche Temperierung über den Kältemittelzufluß zu dem Verdampfer 13, der über das Expansionsventil 14 und Regelventil 15 einstellbar ist.

Im Temperiersystem 9 befinden sich, abgesehen von dem Absperrorgan 12, keine beweglichen, einem hohen Verschleiß unterliegenden Teile, so daß sich dieses System auch durch seine Wartungsfreundlichkeit auszeichnet.

Bevorzugt wird als Wärmetauscher 5 ein Wärmetauscher eingesetzt, der mehrere horizontal verlaufende Rohre aufweist, die, in Strömungsrichtung gesehen, eingangsseitig mit der Zuführleitung 18 über einen nicht näher gezeigten Anschlußkopf verbunden sind. Diese ebenfalls nicht dargestellten Rohre sind geringfügig steigend angeordnet und münden ausgangsseitig in ein vertikales Steigrohr, das mit der Zuleitung 17 des Kondensatabscheiders 11 verbunden ist und die dampfförmige Phase der siedenden Flüssigkeit dem Kondensatabscheider 11 zuführt. Ein solcher Wärmetauscher 5 zeichnet sich durch seinen hohen Wirkungsgrad aus. Seine wirksame Fläche wird dadurch erhöht, daß die einzelnen Rohre von einem Rippenelement umgeben sind.

Bei dem Temperiersystem 9' nach Figur 2 ist der Kondensatabscheider, in diesem Beispiel mit 11' bezeichnet, von seinem Niveau her unterhalb des Wärmetauschers 5 angeordnet. In seinem unteren Bereich, in dem sich die flüssige Phase der siedenden Flüssigkeit befindet, ist ein Heizkörper 19 angeordnet, mit dem die Flüssigkeit verdampft werden kann. Die Dampfphase wird über die Leitung 18', in der ein Absperrorgan 12' angeordnet ist, dem oberen Ende des Wärmetauschers 5 zugeführt, in dem diese gasförmige Phase infolge der Erwärmung des Wärmetauschers 5 kondensiert. Das Kondensat fließt dann über die Leitung 17' zurück in den Kondensatabscheider 11'. Die Aufheizung der Nutzraumluft kann einerseits über die Heizleistung der Heizung 19 und andererseits über das regelbare Absperrorgan 12', mit dem der Gasstrom geregelt werden kann, eingestellt werden.

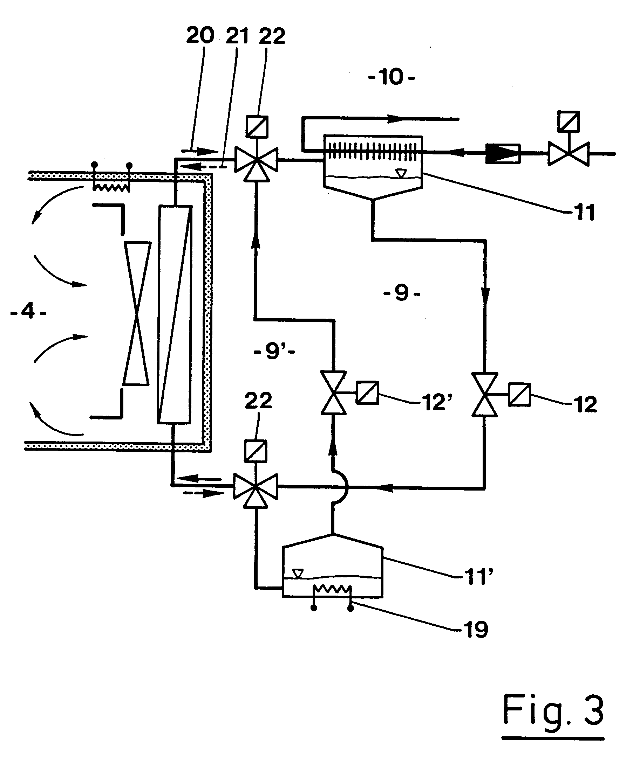

In dem Ausführungsbeispiel nach Figur 3 sind die beiden Ausführungsformen nach den Figuren 1 und 2 vereinigt, so daß diese Klimaprüfkammer sowohl aufgeheizt als auch abgekühlt werden kann. Da die Wirkungsweise der beiden Kondensatabscheider 11 und 11' derjenigen der Kondensatabscheider 11 und 11' nach den Figuren 1 und 2 entspricht, wird zur Erläuterung auf die vorstehende Beschreibung zu diesen Figuren verwiesen. Bei Betrieb des Kondensatabscheiders 11 (Kühlen) ist die Strömungsrichtung der siedenden Flüssigkeit durch die schwarzen Pfeile 20 gekennzeichnet, während die Strömungsrichtung bei Betrieb des unteren Kondensatabscheiders 11' (Heizen) die Strömungsrichtung durch die hellen Pfeile 21 angegeben ist. Die Umschaltung der Temperierung (Kühlen, Heizen) erfolgt durch gleichzeitige Umsteuerung der Ventile 22.

**Patentansprüche**

1. Klimaprüfkammer (1) mit einem Nutzraum (4) und einem angrenzenden Luftbehandlungsraum (2), in dem ein Wärmetauscher (5) angeordnet ist, wobei der Wärmetauscher (5) über einen unteren und einen oberen Anschluß von einem Temperiermedium durchströmt wird, über das in mindestens einem Temperiersystem mit einem einen Verdampfer (13) aufweisenden Kreislauf Wärme übertragen wird, dadurch gekennzeichnet, daß zwei Temperiersysteme (9, 9') vorhanden sind mit jeweils einem Kodensatabscheider (11; 11'), die jeweils in einem unteren Teil die flüssige Phase des Temperiermediums, das eine siedende Flüssigkeit ist, und in einem oberen Teil die gasförmige Phase des Temperiermediums enthalten, wobei der eine Kondensatabscheider (11) des Temperiersystems (9) zur Kühlung niveaumäßig oberhalb des Wärmetauschers (5) angeordnet ist in seinem oberen, die gasförmige Phase des Temperiermediums aufweisenden Bereich einen Verdampfer enthält und wobei der obere Anschluß des Wärmetauschers mit dem oberen, die gasförmige Phase aufweisenden Teil und der untere Anschluß mit dem unteren, die flüssige Phase aufweisenden Teil des einen Kondensatabscheiders (11) strömungsmäßig verbunden ist, daß der andere Kondensatabscheider (11') des Temperiersystems (9) zur Heizung niveaumäßig unterhalb des Wärmetauschers (5) angeordnet ist und in seinem unteren, die flüssige Phase des Tem-

4

periermediums aufweisenden Bereich einen Heizkörper (19) enthält, und daß vor dem einen Anschluß und dem anderen Anschluß des Wärmetauschers (5) jeweils ein umsteuerbares, die Kondensatabscheider (11, 11') verbindendes Ventil (22) angeordnet ist.

2. Klimaprüfkammer nach einem der Anspruche 1, dadurch gekennzeichnet, daß vor dem unteren und/oder oberen Anschluß des Wärmetauschers (5) ein Absperrorgan (12; 12') angeordnet ist.

3. Klimaprüfkammer nach Anspruch 1 oder 2, dadurch gekennzeichnet, daß der Wärmetauscher (5) mehrere in etwa horizontal verlaufende Rohre aufweist, durch die die siedende Flüssigkeit geführt ist, wobei die Rohre auf der einen Seite in ein gemeinsames Zuführrohr münden, das den unteren Anschluß bildet, und auf der anderen Seite in ein Steigrohr übergehen, das den oberen Anschluß bildet.

4. Klimaprüfkammer nach Anspruch 1, dadurch gekennzeichnet, daß der Verdampfer (13) ein Rohr-/Lamellenwärmetauscher ist.

5. Klimaprüfkammer nach Anspruch 1, dadurch gekennzeichnet, daß der Verdampfer (13) ein Rippenrohr ist.

6. Klimaprüfkammer nach Anspruch 1, dadurch gekennzeichnet, daß der Verdampfer (13) eine Rohrschlange ist.

7. Klimaprüfkammer nach einem der Ansprüche 1 bis 6, dadurch gekennzeichnet, daß das Temperiermedium ein Kältemittel auf der Basis von Fluor-Kohlenwasserstoffist.

8. Klimaprüfkammer nach Anspruch 1, dadurch gekennzeichnet, daß der Heizkörper (19) ein Widerstandsheizkörper ist.

## Claims

1. A climate testing chamber (1) with a working space (4) and an adjoining air treatment space (2) in which a heat exchanger (5) is arranged, in which the heat exchanger (5) has a tempering medium flowing through it via a lower and an upper connection, via which tempering medium heat is transferred in at least one tempering system with a circuit which has an evaporator (13), characterised in that there are two tempering systems (9, 9') in each case with one condensate separator (11; 11'), which in each case contain in a lower part the liquid phase of the tempering medium which is a boiling liquid, and in an upper part the gaseous phase of the tempering medium, in which one condensate separator (11) of the tempering system(9) for cooling is arranged, with regard to its level, above the heat exchanger(5), contains an evaporator in its upper region, having the gaseous phase of the tempering medium, and in which the upper connection of the heat exchanger is connected, in terms of flow, with the upper part, having the gaseous phase, and the lower connection is connected, in terms of flow, with the lower part, having the liquid phase, of one condensate separator (11), that the other condensate separator (11') of the tempering system (9) for heating is arranged, with regard to its level, beneath the heat exchanger (5) and contains a heating element (19) in its lower region, having the liquid phase of the tempering medium, and that before one connection and the other connection of the heat exchanger (5) in each case a reversible valve (22) connecting the condensate separators (11, 11') is arranged.

2. A climate testing chamber according to Claim 1, characterised in that before the lower and/or upper connection of the heat exchanger (5) a shut-off device (12; 12') is arranged.

3. A climate testing chamber according to Claim 1 or 2, characterised in that the heat exchanger (5) has a plurality of pipes running substantially horizontally, through which the boiling liquid is guided, in which the pipes open on one side into a common feed pipe, which forms the lower connection, and on the other side continue into a riser which forms the upper connection.

4. A climate testing chamber according to Claim 1, characterised in that the evaporator (13) is a tube-/sheet heat exchanger.

5. A climate testing chamber according to Claim 1, characterised in that the evaporator (13) is a finned tube.

6. A climate testing chamber according to Claim 1, characterised in that the evaporator (13) is a spiral tube.

7. A climate testing chamber according to one of Claims 1 to 6, characterised in that the tempering medium is a refrigerating medium based on fluoro-hydrocarbon.

8. A climate testing chamber according to Claim 1, characterised in that the heating element (19) is a resistance heating element.

## Revendications

1. Chambre pour essais climatiques (1), comportant un volume utile (4) et, adjacent à celui-ci, un volume de traitement d'air (2) dans lequel est agencé un échangeur de chaleur (5), lequel échangeur de chaleur (5) est parcouru par un fluide de mise en équilibre de température passant par un raccord inférieur et par un raccord supérieur, ce fluide transmettant de la chaleur dans au moins un système de mise en équilibre de température avec une circulation présentant un évaporateur (13), caractérisée par le fait qu'il y a deux systèmes de mise en équilibre de température (9, 9') ayant chacun un collecteur de condensat (11, 11') et contenant chacun, dans une partie inférieure, la phase liquide du fluide de mise en équilibre de température, lequel est un liquide bouillant, et dans une partie supérieure la phase gazeuse du fluide de mise en équilibre de température, le premier collecteur de condensat (11) du système de mise en équilibre de température (9) pour le refroidissement, étant agencé avec son niveau plus haut que l'échangeur de chaleur (5) et contenant un évaporateur dans sa région supérieure présentant la phase gazeuse du fluide de mise en équilibre de température, le raccord supérieur de l'échangeur de chaleur étant, du point de vue écoulement, relié à la partie supérieure présentant la phase gazeuse, et le raccord inférieur étant relié du point de vue de l'écoulement à la partie inférieure, présentant la phase liquide, du premier collecteur de condensat (11), par le fait que l'autre collecteur de condensat (11') du système de mise en équilibre de température (9), pour le chauffage, est agencé avec son niveau plus bas que l'échangeur de chaleur (5) et contient, dans sa région inférieure présentant la phase liquide du fluide de mise en équilibre de température, un élément chauffant (19), et par le fait qu'en avant du premier raccord et de l'autre raccord de l'échangeur de chaleur (5) est agencée à chaque fois une vanne d'inversion (22) reliant les collecteurs de condensat (11, 11').

2. Chambre pour essais climatiques selon la revendication 1, caractérisée par le fait qu'un organe d'arrêt (12; 12') est agencé avant le raccord inférieur et/ou supérieur de l'échangeur de chaleur (5).

3. Chambre pour essais climatiques selon revendication 1, caractérisée par le fait que l'échangeur de chaleur (5) présente plusieurs tubes s'étendant sensiblement horizontalement, par lesquels passe le liquide bouillant, les tubes débouchant d'un côté dans un tube d'amenée commun qui forme le raccord inférieur, et, de l'autre côté, se raccordant en un tube montant qui forme le raccord supérieur.

4. Chambre pour essais climatiques selon revendication 1, caractérisée par le fait que l'évaporateur (13) est un échangeur de chaleur à tube(s) à ailettes ou nervures.

5. Chambre pour essais climatiques selon revendication 1, caractérisée par le fait que l'évaporateur (13) est un tube à nervures.

6. Chambre pour essais climatiques selon revendication 1, caractérisée par le fait que l'évaporateur (13) est un serpentin.

7. Chambre pour essais climatiques selon l'une des revendications 1 à 6, caractérisée par le fait que le fluide de mise en équilibre de température est un agent réfrigérant à base d'hydrocarbure fluoré.

8. Chambre pour essais climatiques selon revendication 1, caractérisée par le fait que l'élément chauffant (19) est un élément chauffant à résistance.

Fig. 1

Fig. 2

## Fig. 3